(19) Europäisches Patentamt / European Patent Office / Office européen des brevets

(11) **EP 4 497 270 B1**

(12) **EUROPEAN PATENT SPECIFICATION**

(45) Date of publication and mention
of the grant of the patent:
**17.12.2025 Bulletin 2025/51**

(21) Application number: **22723515.7**

(22) Date of filing: **22.04.2022**

(51) International Patent Classification (IPC):
$H04W\ 48/18^{(2009.01)}$    $H04L\ 45/85^{(2022.01)}$
$H04L\ 47/125^{(2022.01)}$    $H04L\ 47/28^{(2022.01)}$
$H04L\ 47/70^{(2022.01)}$    $H04W\ 28/088^{(2023.01)}$
$H04W\ 28/08^{(2023.01)}$    $H04L\ 41/0894^{(2022.01)}$
$H04L\ 41/40^{(2022.01)}$

(52) Cooperative Patent Classification (CPC):
H04W 48/18; H04L 45/85; H04L 47/125;
H04L 47/28; H04L 47/826; H04L 47/829;
H04W 28/088; H04W 28/0908; H04W 28/0958;
H04L 41/0894; H04L 41/40

(86) International application number:
**PCT/US2022/025865**

(87) International publication number:
**WO 2023/204814 (26.10.2023 Gazette 2023/43)**

(54) **DYNAMIC NETWORK SLICING BASED RESOURCE SCHEDULING FOR REMOTE REAL-TIME ROBOTIC ADAPTIVE REPAIR**

DYNAMISCHE NETZWERK-SLICING-BASIERTE RESSOURCENPLANUNG FÜR FERNGESTEUERTE ROBOTISCHE ADAPTIVE REPARATUR IN ECHTZEIT

PLANIFICATION DE RESSOURCES BASÉE SUR UN TRANCHAGE DE RÉSEAU DYNAMIQUE POUR UNE RÉPARATION ADAPTATIVE ROBOTIQUE EN TEMPS RÉEL À DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.01.2025 Bulletin 2025/05**

(73) Proprietor: **Siemens Aktiengesellschaft**
**80333 München (DE)**

(72) Inventors:
• **MIN, Ziran**
**Woodbridge, New Jersey 07095 (US)**
• **MAHMOUDI, Charif**
**Montclair, New Jersey 07042 (US)**
• **SHEKHAR, Shashank**
**Lawrenceville, New Jersey 08648 (US)**
• **FORMICOLA, Valerio**
**Princeton, New Jersey 08540 (US)**

(74) Representative: **HKW Intellectual Property PartG mbB**
**Theresienhöhe 12**
**80339 München (DE)**

(56) References cited:
**WO-A1-2020/167978**    **US-A1- 2022 124 560**

• **ALATTAS REEM J ET AL: "Evolutionary Modular Robotics: Survey and Analysis", JOURNAL OF INTELLIGENT, SPRINGER NETHERLANDS, DORDRECHT, vol. 95, no. 3, 16 July 2018 (2018-07-16), pages 815 - 828, XP036849555, ISSN: 0921-0296, [retrieved on 20180716], DOI: 10.1007/S10846-018-0902-9**
• **ZIRAN MIN ET AL: "Software-defined Dynamic 5G Network Slice Management for Industrial Internet of Things", ARXIV.ORG, CORNELL UNIVERSITY LIBRARY, 201 OLIN LIBRARY CORNELL UNIVERSITY ITHACA, NY 14853, 5 September 2022 (2022-09-05), XP091309505**

**Description**

BACKGROUND

Adaptive repair in robotics generally refers to modification of a component to maintain or update the component in a changed or changing environment. In some cases, components can be repaired using wireless robotic arms. Example components include, without limitation, shafts, pistons, blades, and molds. It is recognized herein that current approaches to using wireless communication technologies in robotic repairing lack efficiencies, among other technical shortcomings. For example, some current approaches introduce increased latencies, such that the resulting repair is too slow for various industrial protocols to effectively perform.

BRIEF SUMMARY

Embodiments of the invention address and overcome one or more of the described-herein shortcomings by providing methods, systems, and apparatuses that perform dynamic slicing technology to assign network resources for various robotic repairing subtasks having different priorities, while satisfying various real-time and high throughput requirements. In some cases, M/M/1 queuing theory is applied so as to efficiently improve the utilization of network resources, reduce queuing latency and propagation latency, and balance the load among different network slicing.

In an example aspect, robotic repair is performed by a node within a core network that defines a plurality of network slices. Example operations include obtaining a directed acyclic graph (DAG) and an arrival time associated with a first user equipment (UE). The arrival time can indicate when the first UE connected to the core network. Based on the DAG, the node can calculate a task priority associated with the first UE. Based on the arrival time and the task priority, the node can calculate a UE priority associated with the first UE. Based on the UE priority, the node can assign the first UE to a first network slice of the plurality of network slices. The node can calculate an average load defined by user plane functions within the first network slice, and compare the average load to a predetermined threshold. In an example, when the average load is less than the predetermined threshold, the node performs an objective function so as to determine that a first user plane function of the user plane functions within the first network slice has more available resources as compared to the other user plane functions within the first network slice.

In some cases, the node can identify a new connection between the first UE and the core network, and obtain the DAG responsive to the new connection. Additionally, the node can store the task priority in a sorted list. The sorted list can define tasks and respective priorities associated with each task. The node can calculate the UE priority further based on the sorted list. In another example aspect, based on the task priority, the node can create or prepare a user plane function (UPF) pool associated with each network slice of the plurality of network slices, wherein the UPF pool associated with the first network slice defines the first user plane function. Furthermore, the node can determine whether a UE waitlist is empty such that the UE waitlist includes no available UE. When the UE waitlist is not empty such that the UE waitlist includes at least one available UE, the node can assign the first UE to the first network slice. The node can further determine whether the first network slice is empty such that the first network slice includes no user plane functions. When the first network slice is not empty, the node can calculate the average load defined by the user plane functions within the first network slice. The node can pre-assign the first UE to the first user plane function so as to define a new average load defined by the user plane functions within the first network slice. Additionally, the node can compare the new average load to the predetermined threshold. When the new average load is less than the predetermined threshold, the node can assign the first UE to the first user plane function. When the first network slice is empty, or when the average load or the new average load is greater than the predetermined threshold, the node can determine whether the UPF pool associated with the first network slice is empty. When the UPF pool associated with the first network slice is empty, the node can wait for an available UPF from the UPF pool associated with the first network slice. When the UPF pool associated with the first network slice is not empty, the node can assign a second UPF from the UPF pool to the first network slice, and can assign the first UE to the second UPF. Document US 2022/0124560 A1 describes a resilient (radio) access network ((R)AN) slicing framework encompassing a resource planning engine and distributed dynamic slice-aware scheduling modules at one or more network access nodes, edge compute nodes, or cloud computing service. The resilient (R)AN slicing framework includes resource planning and slice-aware scheduling, as well as signaling exchanges for provisioning resilient (R)AN slicing. The intelligent (R)AN slicing framework can realize resource isolation in a more efficient and agile manner than existing network slicing technologies. Further, document WO 2020/167978 A1 describes systems and methods of handling user traffic in an integrated access backhaul (IAB) network. For instance, a data counter for two or more of a plurality of user equipment (UE) bearers handled by an IAB node can be configured. Data corresponding to the two or more UE bearers of the plurality of UE bearers can be received. A first UE bearer can be selected. The first UE bearer is the UE bearer having the lowest data counter value of the two or more UE bearers. Data corresponding to the first UE bearer can be transferred to a mobile terminal (MT) in the IAB node. The data counter for the first UE bearer can be increased by a total size of the transferred data.

BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:

FIG. 1 is a block diagram of an example system defining a core network that incudes an SDN controller configured to perform dynamic network slicing for robotic repair, in accordance with an example embodiment.

FIG. 2 is a flow diagram that illustrates operations that can be performed by the system of FIG. 1, in accordance with an example embodiment.

FIG. 3 is a diagram of an example of a directed acyclic graph (DAG) and a sorted list that can be derived from the DAG, in accordance with an example embodiment.

FIG. 4 illustrates a computing environment within which embodiments of the disclosure may be implemented.

DETAILED DESCRIPTION

As an initial matter, it is recognized herein that current robotic repair technologies typically do not satisfy real-time requirements for robotic repairing. In some cases, the latency in a ZigBee-based approach is 600 milliseconds (ms), which can be about sixty times the real-time requirements. As another example, a Bluetooth-based monitoring process for milling can involve latency during data transmission and latency during device discovery. In various embodiments described herein, dynamic network slicing is utilized to perform scanning, detection, path generation, robot milling, and milling monitoring in parallel so as satisfy robotic repairing real-time requirements. In some cases, robotic repairing requires an end-to-end latency of less than 10 ms.

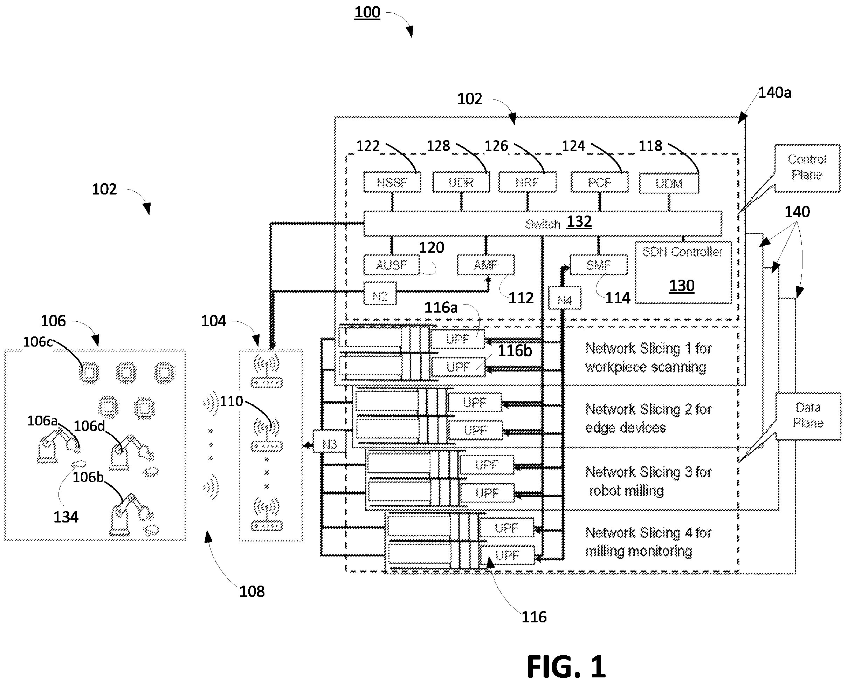

Referring to FIG 1, an example system or network 100 is shown that includes a 5G core network 102 communicatively coupled to a radio access network (RAN) 104. The RAN 104 can employ a radio technology (e.g., E-UTRA) to communicate with various user equipment (UEs) 106 over an air interface 108. The UEs 106 can include, for example and without limitation, a camera 106a, a robotic arm 106b, and various edge devices 106c. The core network entities are identified by names given to those entities in existing 3GPP specifications, though it will be understood that the 5G core network or entities within the core network may be identified by other names (or functions or entities may be combined) in the future. Thus, it will be understood that the 5G entities and functionalities are provided by way of example, and embodiments described herein may embodied or implemented in similar communication systems that are presently defined or defined in the future, and all such systems are contemplated as being within the scope of this disclosure.

The RAN 104 can include a plurality of base stations 110 that include one or more transceivers for communicating with the UEs 106 over the air interface 108. The base stations 110 can define an eNB, a gNB, or the like. Each of the base stations 110 can be associated with a particular cell, and may be configured to handle radio resource management decisions, handover decisions, scheduling of users in the uplink and/or the downlink, and the like. The base stations 110 may communicate with one another over an X2 interface.

The 5G core network 102 can include a mobility management gateway (MME), serving gateway, and packet data network (PDN) gateway. The 5G core network 102 can further include an access and mobility management function (AMF) 112, a session management function (SMF) 114, user plane functions (UPFs) 116, a user data management function (UDM) 118, an authentication server function (AUSF) 120, a Network Slice Selection Function (NSSF) 122, a policy control function (PCF) 124, a network function (NF) repository function (NRF) 126, a Unified Data Repository (UDR) 128, and a software-defined network (SDN) controller 130.

While each of the foregoing elements are depicted as part of the 5G core network 102, it will be appreciated that any one of these elements may be owned and/or operated by an entity other than the core network operator. It should also be appreciated that the 5G core network 102 may consist of less elements, alternative elements, or additional elements, and all such core networks are contemplated as being with the scope of this disclosure.

Still referring to FIG. 1, the AMF 112 can be connected to the RAN 104 via an N2 interface, and the AMF 112 may serve as a control node. For example, the AMF 112 may be responsible for registration management, connection management, reachability management, access authentication, and access authorization. The AMF 112 may generally route and forward NAS packets to/from the UEs 106. The SMF 114 may be connected to the AMF 112 via a switching stack or multilayer switch 132, for instance an Open vSwitch. The SMF 114 can be connected to the PCF 124 via the switch 132. Additionally, or alternatively, the SMF 114 and may be connected to the UPFs 116 via an N4 interface. The SMF 114 may serve as a control node. For example, the SMF 114 may be responsible for Session Management, IP address allocation of the UEs 106, configuration of traffic steering rules in the UPFs 116, and generation of downlink data notifications. The SMF 114 may also be connected to the UPFs 116, which may provide the UEs 106 with access to a data network, such as the Internet, to facilitate communications between the UEs 104 and IP-enabled devices.

With continuing reference to FIG. 1, the SMF 114 can manage and configure traffic steering rules in the UPFs 116 via the N4 interface. The UPFs 116 may be responsible for interconnecting a packet data unit (PDU) session with a data network, packet routing and forwarding, policy rule enforcement, quality of service handling for user plane traffic, and downlink packet buffering. The AMF 112 may also be connected to the base stations 110 via an N2 interface. The base stations 110 can facilitate a connection between the UEs 104 and the 5G core 102 via various radio interface technologies. The PCF 124 may be connected to the SMF 114, the AMF 112, and the AUSF 120 via the switch 132. In some examples, the PCF 124 can provide policy rules to control plane nodes, for instance the AMF 112 and SMF 114, so as to enable the control plane nodes to enforce these rules. The UDM 118 can acts as a repository for authentication credentials and subscription information. The UDM 118 can connect to other functions, for instance the AMF 112, SMF 114, and AUSF 120, via the switch 132. The AUSF 120 can perform authentication-related operations, and can connect to the UDM 118 and the AMF 112 via the switch 132.

With continuing reference to FIG. 1, example robotic repair operations can be performed by the system 100. The operations can include, without limitation, workpiece milling, defect detection, tool path generation, and milling monitoring. In an example, the camera 106a, for instance a 5G camera, scans a target workpiece 134 so as to collect data associated with the target workpiece 134. The camera 106a can send the data associated with the target workpiece 134 to the edge devices 106c over a network, for instance the 5G network that includes the RAN 104 and the 5G core network 102. Based on the data, the edge devices 106c can identify defects of the target workpiece 134. In particular, for example, the edge devices 106c can compare the scanned data with the standard workpiece data, so as to identify defects. Based on the defects, the edge devices 106c can determine a comprehensive repairing tool path for repairing the target workpiece 134. The edge devices 106c can send the comprehensive repairing tool path to the robotic arm 106b over the 5G network. Responsive to receiving the repairing tool path, the robotic arm 106b can mill the target workpiece 134. While the robotic arm 106b mills the target workpiece 134, the camera 106a can monitor the milling, for instance to prevent accidents. It will be understood that this repairing process is presented as an example, and various repair or other robotic operations can be performed over the network, and all such operations are contemplated as being within the scope of this disclosure.

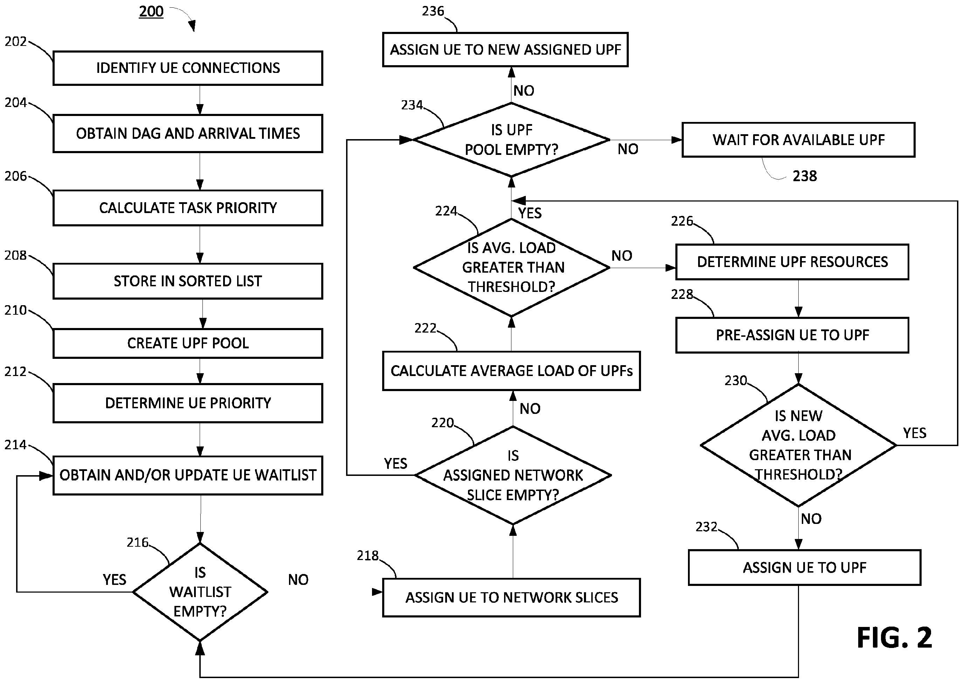

In the example robotic repairing operation described above, and in various other robotic repair operations, it is recognized herein that the network traffic can be heavy such that each step in the operation defines its own network requirements. Thus, in accordance with various embodiments, multiple network slices 136 can balance the data plane traffic so as to satisfy the network requirements. In particular, in some cases, for example, the cameras 106a, robotic arms 106b, and edge devices 106c can dynamically change or adjust their network slicing (e.g., at 218 and 232 of FIG. 2) based on their respective request rates and packet lengths. In some examples, each step in the repairing operation is associated with a specific request rate and packet length. By way of example, the UPFs can belong to different network slicing, such that each network slicing has a number of UPFs. In accordance with various example embodiments, the operations 200 (see FIG. 2) enable UEs 106 to select the network slicing, for instance based on a given UE's next task.

Referring now to FIG. 2, to perform dynamic network slicing, for instance to perform the example robotic repair operations described above, the system 100 can perform operations 200. In an example, the operations 200 define a dynamic network slicing scheduling method performed by the SDN controller 130 communicatively coupled to the switch 132 (e.g., an Open vSwitch). It will be understood that the operations 200 can be performed by additional or alternative nodes or entities, for instance additional or alternative 5G functions in the core network 102, and all such implementations of the operations 200 are contemplated as being within the scope of this disclosure.

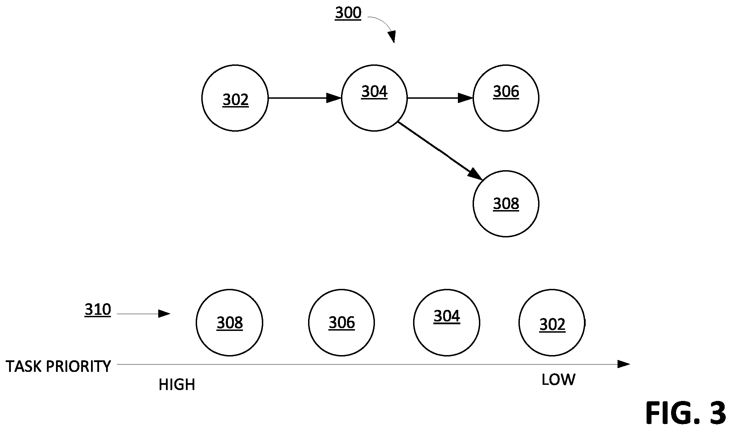

Still referring to FIG. 2, at 202, the SDN controller 130 can identify a new connection between one of the UEs 106, for instance a first UE 106d, and the core network 102. Responsive to the new connection, at 204, the SDN controller 130 can obtain a directed acyclic graph (DAG) and an arrival time associated with the first UE 106d. In an example, the arrival time indicates when the first UE 106d connected to the core network 102. In some cases, the SCN controller 130 can obtain the arrival time from a UE waitlist stored and maintained by the AMF 112. For example, the AMF 112 can define a matrix that stores various connection statuses and priorities associated with the UEs 106. Referring also to FIG. 3, the DAG, for instance an example DAG 300, can define a topology relationship of various repairing operations or tasks, for instance the robotic repair operations described above with respect to the target workpiece 134. In particular, for example, the DAG 300 can define a relationship between a workpiece scanning task 302, a defect detection task 304, a robot milling task 306, and a milling monitoring task 308. A given DAG can be stored in a matrix D that can be represented as $\{d_{00}, d_{01}, ..., d_{ss}\}$, where s represents the total tasks, and $d_{01}$ represents an edge from task 0 to task 1. The edge from task 0 to task 1 indicates that task 0 happens earlier than task 1 in the given robotic repairing operation. The task ID and the number of tasks for the robotic repairing operation can be input into a topology sorting algorithm. At 206, based on the DAG 300, the SDN controller 130 can calculate a task priority associated with the first UE 106d. In particular, for example, the SDN controller can apply the topology sorting algorithm on the DAG 300, so as to calculate a respective task priority for each of the workpiece scanning task 302, the defect detection task 304, the robot milling task 306, and the milling monitoring task 308. For example, a sorted list can be generated that includes the task IDs in order of the calculated task priorities. In particular, for example, a task ID that is rendered early in the list can indicate that the associated task happens early and has a higher task priority as compared to tasks associated with task IDs that are later in the list.

With continuing reference to FIGs. 2 and 3, at 208, the SDN controller 130 can store each task priority in a sorted list 310 that defines tasks and respective task priorities associated with each task. By way of example, the sorted list 310 indicates that the milling monitoring task 308 is the highest priority task, the robot milling task 306 is the second highest priority task, and the workpiece scanning task 302 is the lowest priority task. The sorted list or task priority list can be represented as $S = \{(task_1, tp_1), (task_2, tp_2), (task_3, tp_3), ..., (task_s, tp_s)\}$, where s represents the total tasks; $task_s$ is the ID of the $s^{th}$ task; and $tp_s$ is the task priority of $s^{th}$ task. Based on the task priorities, at 210, the SDN controller 120 can create a UPF pool. The UPF pool can include a number of pre-configured UPFs. In some cases, a network slicing in charge of higher priority tasks has more UPFs in the UPF pool than other network slices. The coefficient of the number UPFs in the UPF pool can be defined as $\alpha$, such that: $\alpha \sum_{k=1}^{s} tp_k = r$ , where, in the UPF pool, there are $\alpha tp_1$ UPFs prepared for the first network slicing; and the range of UPFs within the first network slicing can be represented as $[1, \alpha tp_1]$. Further, there can be $\alpha tp_s$ UPFs prepared for the $s^{th}$ network slicing, and the range of the $s^{th}$ network slicing in the UPF pool can be represented by $[\alpha \sum_{k=1}^{s-1} tp_k , \alpha \sum_{k=1}^{s} tp_k]$.

Thus, the UPF pool can include the UPFs 116 that are available for network slicing. For example, a generated or prepared UPF pool can be represented as $UPF\_Pool = \{upf_1, upf_2, upf_3, ..., upf_r]$, where r represents the total UPFs 116, and $upf_r$ is the ID of the $r^{th}$ UPF. At 212, based on the sorted list and the arrival time associated with a given UE, for instance the first UE 106d, the SDN controller 130 can calculate a UE priority associated with the first UE 106d. In some examples, the SDN controller 130 can obtain a buffer status of the first UE 106d, and can calculate the priority of the first UE 106d based on its buffer status, associated task priority, and arrival time. In some examples, the UE priority can be represented as $Task\ Priority + \frac{1}{Arrival\ Time}$ . For example, a UE buffer can have a free state and service state. In an example, if the SDN controller 130 detects 0 bytes in the buffer of the first UE 106d, the SDN controller 130 can set the first UE 106d to the free state, which indicates that the first UE 106d has finished its previous job and is waiting for a new job. Alternatively, if the SDN controller does not detect 0 bytes in the buffer of the first UE 106d, the SDN controller 130 can set the first UE 106d to the service state, which indicates that the first UE 106d is still working on the current job. Thus, UEs, for instance the first UE 106d, can have an on status and an off status. For example, if a given UE buffer is in a free state, the associated UE can be set to the off status. Otherwise, the associated UE can be set to the on status. In some cases, only UEs having an off status are added to the UE waitlist.

Thus, the SDN 130 can update UE statuses, for instance the status of the first UE 106d, based on their respective buffer states. In particular, for example, at 214, the SDN controller 130 can obtain the UE waitlist, for instance from the AMF 112, and can add the UEs 106 having a free state to the UE waitlist. At 216, the SDN controller 130 can determine whether the UE waitlist is empty such that the UE waitlist includes no available UEs 106. When the SDN controller 130 determines that the UE waitlist includes available UEs so as to define a waitlist that is not empty, the SDN controller 130 can assign UEs to network slices (at 218). For example, at 218, based on the UE priority of the first UE 106d, the SDN controller 130 can assign the first UE 106d to a first network slice 140a of the plurality of network slices 140, so as to define an assigned network slice 140a. Thus, each UE in the UE waitlist can be assigned to a respective network slice based on their UE respective UE priority. At 220, the SDN controller 130 can determine whether the assigned network slice is empty, such that the assigned network slice includes no UPFs 116. When the SDN controller 130 determines that a given assigned network slice is not empty, the process can proceed to 222, where the SDN controller 130 can calculate an average load defined by the UPFs 116 within the respective assigned network slice. For example, at 220, the SDN controller 130 can determine that the first network slice 140a is not empty, and then the SDN 130 can calculate an average load ($\bar{\theta}$) defined by a first and second UPF 116a and 116b, respectively, that are within the first network slice 140a (at 222).

In an example, the UE request arrivals follow a Poisson process, such that the load of the $j^{th}$ UPF ($\theta_j$) can represented by $\sum_{i=1}^{n} \lambda_i x_{ij}$ ; where n represents the number of UEs 106; $\lambda_i$ represents the request rate of the $i^{th}$ UE; and $X_k$ represents the UE requests to UPF assignment matrix of $k_{th}$ network slicing, such that $x_{ij} = 1$ means that the $i^{th}$ user sends request to the $j^{th}$ UPF. Thus, in some examples, the SDN 130 can calculate an average load among all UPFs within the $k^{th}$ network slicing as: $\bar{\theta}_k = \frac{1}{\alpha tp_k} \sum_{\alpha tp_{k-1}}^{\alpha tp_k} \theta_j$ , where the coefficient of the number of UPFs in a UPF pool is $\alpha \sum_{k=1}^{s} tp_k = r$. For example, in the UPF pool, there can be $\alpha tp_1$ UPFs prepared for the $1^{st}$ network slicing, wherein the range of UPFs within the first network slicing in the UPF pool is $[1, \alpha tp_1]$. Further, there can be $\alpha tp_s$ prepared for the $s^{th}$ network slicing, and the range of $s^{th}$ network slicing in the UPF pools is $[\sum_{k=1}^{s-1} tp_k, \alpha \sum_{k=1}^{s} tp_k]$.

Referring again to FIG. 2, at 224, the SDN controller 130 can compare the average load to a predetermined threshold, which can be represented as $\bar{\theta} < \tau\theta_{max}$; where $\tau$ represents the threshold for a given UPF load, and $\theta_{max}$ represents the maximum load for the UPF. The maximum load and the threshold can vary based on different hardware or software. In an example, when a particular network or testbed is implemented, the maximum load and the threshold can be fixed. In an example, the predetermined threshold ($\tau$) is about 80%, such that the average load is greater than the predetermined threshold when the average load is greater than 80% of the maximum load, though it will be understood that the predetermined threshold can vary as desired, and all such thresholds are contemplated as being within the scope of this disclosure. When the average load is less than the predetermined threshold, the operations can proceed to 226, in which the SDN controller performs an objective function $F(X)$ so as to determine that one of the UPFs 116, for instance the first UPF 116a of the use first network slice 140a, has more available resources as compared to the other UPFs 116, for instance the second UPF 116b, within the first network slice 140a.

At 226, the SDN controller 130 can perform the objective function $F(X)$ so as to calculate an objective function value for each UPF within the assigned network slice. In particular, for example, the SDN controller 130 can perform the objective function $F(X)$ so as to determine that the first UPF 116a within the first network slice 140a has more available resources as compared to the other UPFs 116 within the first network sliced 140a.

In various examples, the objective of the objective or optimization function $F(X)$ is to minimize delay (e.g., average and tail) while optimally utilizing computing resources for networking. Thus, the objective function can define an optimization problem formulation, as now described. For example, the propagation delay $W_t$ can be represented by $\sum_{i=1}^{n} \frac{l_{i,j}}{d_{ij}}$ ; where $l_{i,j}$ represents the length of packet from the $i^{th}$ UE to the $j^{th}$ UPF; $d_{ij}$ represents the transmission rate between the $i^{th}$ UE and the $j^{th}$ UPF; and $n$ is the number of user equipments (UEs). The overall latency can be represented by: $W_s + W_t = \frac{1}{\mu - \theta_j} + \frac{l_{i,j}}{d_{ij}}$, where $\mu$ represents the service rate for all UPFs. The expected queuing time before a request from a UE is serviced can be represented by $W_q = \frac{\theta_j}{\mu(\mu - \theta_j)}$ . The expected end-to-end response time, which is the sum of the request queuing time and the UPF service time, can be represented by: $W_s = W_q + \frac{1}{\mu} = \frac{1}{\mu - \theta_j}$ . The average queuing latency and the propagation latency of the all the UPFs within the $k^{th}$ network slicing can be represented by: $G(X_k) = \frac{1}{n} (\sum_{i=1}^{n} \sum_{j=atp_{k-1}}^{atp_k} \frac{x_{ij}}{\mu - \theta_j} + \frac{l_{i,j}}{d_{ij}})$ . The variance of the queuing latency and the propagation latency of the UPFs within the $k^{th}$ network slicing can be represented by: $V(X_k) = \frac{1}{n} (\sum_{i=1}^{n} \sum_{j=atp_{k-1}}^{atp_k} (\frac{x_{ij}}{\mu - \theta_j} + \frac{l_{i,j}}{d_{ii}} - G(x)))^2$ . Thus, the objective function $F(X)$ can define a problem formulation as follows: min $F(X) = \sum_{k=1}^{s} (w_1 G(X_k + w_2 V(X_k))$ , where $w_1$ and $w_2$ are weight factors that can be tuned accordingly. As shown, the SDN controller 130 can solve the objective function $F(X)$ so as to minimize the average UE queuing latency and the average propagation latency in a standalone 5G network. In doing so, the objective function can be subject to various constraints, such as: for each UPF, the sum of the request rates from all connected UEs should be less than the UPF's processing rate $\mu$; each UE can only be connected to one UPF at a time; the UE connection decision is encoded in a matrix $x_{ij}$ with binary elements; and the number of UPFs is limited and the task having a higher priority will have more prepared UPFs in the UPF pool.

Referring again to FIG. 2, at 228, after performing the objective function, the SDN controller 130 can pre-assign the UE that has the minimum objective function value to the UPF. For example, the first UE 106d can be pre-assigned to the first UPF 140a so as to define a new average load defined by the UPFs 106 (e.g., UPF 106a and 106b) within the first network slice 140a. Such a pre-assignment can indicate that the respective UE is temporally and logically assigned to the UPF for calculating the new average load. At 230, the SDN controller 130 can compare the new average load to the predetermined threshold or threshold value. When the new average load is less than the predetermined threshold (e.g., a percentage of the maximum load), the SDN controller 130 can physically assign the UE to the UPF, at 232. By way of example, the first UE 106d can be assigned to the first UPF 116a. In some cases, the UPF 116a can be released from the UPF pool. Thus, if the SDN controller 130 detects a UPF that does not connect to any UEs, the SDN controller can release the UPF to the UPF pool. After assignment, the process can return to 216, where the SDN controller 130 can determine whether the UE waitlist is empty. When the UE waitlist is empty, the process can return to 214.

Still referring to FIG. 2, when (at 224) is it determined that the average load is greater than the predetermined threshold, the SDN controller 130 can identify that the UPFs within the assigned network slice have a risk of overload. In response, the process can proceed to 234, where the SDN controller 130 determines whether the UPF pool in the range of the assigned network slice is empty. For example, the SDN controller 130 can determine whether the UPF pool associated with the first network slice 140a is empty. Similarly, when (at 230) it is determined that the new average load is greater than the predetermined threshold, the process can proceed to 234, where the SDN controller 130 can determine whether the UPF pool associated with the assigned network slice is empty. Further still, when (at 220) it is determined that assigned network slice, for instance the first network slice 140a, is empty the process can proceed to 234. At 234, when the SDN controller determines that the UPF pool associated with the assigned network slice is empty, the process can proceed to 236. At 236, the SDN controller 130 can pull or assign a UPF from the UPF pool in the assigned network slice range to the assigned network slice, so as to push the UPF to the assigned network slice and define a new assigned UPF. Further, at 236, the SDN controller 130 can assign the UE, for instance the first UE 106d, to the new assigned UPF. In some cases, the SDN controller 130 can release the empty UPFs within the assigned network slice to the UPF pool while executing the UE assignment.

After finishing the UE assignment, the SDN controller can return to 216 so as to determine whether the UE waitlist is empty and repeat the UE assignment steps. When, at 234, the SDN controller 130 determines that the UPF pool in the range of the assigned network slice is not empty, the process can proceed to 238, where SDN controller waits for an available UPF from the UPF pool in the assigned network slicing range. In some examples, at 238, if the assigned network slicing range of the UPF pool runs out of resources, the SDN 130 can add a UPF from the network slicing range with a lower priority to the network slicing range with a higher priority.

Thus, as described herein, various embodiments perform dynamic slicing technology to assign network resources for various repairing subtasks having different priorities, while satisfying various real-time and high throughput requirements. Embodiments described herein can apply M/M/1 queuing theory so as to efficiently improve the utilization of network resources, reduce queuing latency and propagation latency, and balance the load among different network slicing.

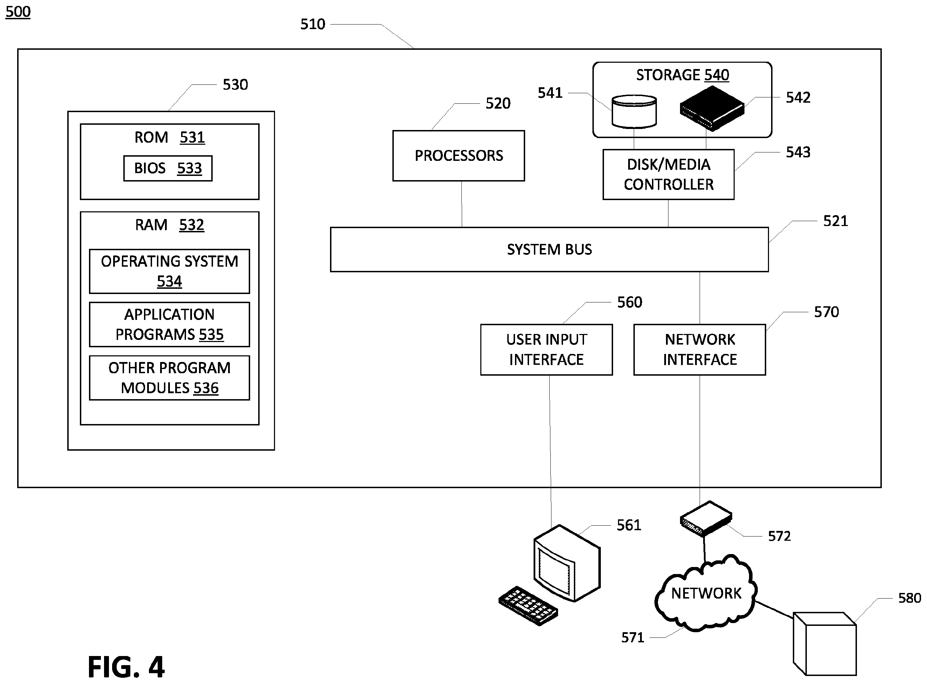

FIG. 4 illustrates an example of a computing environment within which embodiments of the present disclosure may be implemented. A computing environment 300 includes a computer system 510 that may include a communication mechanism such as a system bus 521 or other communication mechanism for communicating information within the computer system 510. The computer system 510 further includes one or more processors 520 coupled with the system bus 521 for processing the information. The system 100 may include, or be coupled to, the one or more processors 520.

The processors 520 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 520 may have any suitable microarchitecture design that includes any number of constituent components such as, for example, registers, multiplexers, arithmetic logic units, cache controllers for controlling read-/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 521 may include at least one of a system bus, a memory bus, an address bus, or a message bus, and may permit exchange of information (e.g., data (including computer-executable code), signaling, etc.) between various components of the computer system 510. The system bus 521 may include, without limitation, a memory bus or a memory controller, a peripheral bus, an accelerated graphics port, and so forth. The system bus 521 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 4, the computer system 510 may also include a system memory 530 coupled to the system bus 521 for storing information and instructions to be executed by processors 520. The system memory 530 may include computer readable storage media in the form of volatile and/or nonvolatile memory, such as read only memory (ROM) 531 and/or random access memory (RAM) 532. The RAM 532 may include other dynamic storage device(s) (e.g., dynamic RAM, static RAM, and synchronous DRAM). The ROM 531 may include other static storage device(s) (e.g., programmable ROM, erasable PROM, and electrically erasable PROM). In addition, the system memory 530 may be used for storing temporary variables or other intermediate information during the execution of instructions by the processors 520. A basic input/output system 533 (BIOS) containing the basic routines that help to transfer information between elements within computer system 510, such as during start-up, may be stored in the ROM 531. RAM 532 may contain data and/or program modules that are immediately accessible to and/or presently being operated on by the processors 520. System memory 530 may additionally include, for example, operating system 534, application programs 535, and other program modules 536. Application programs 535 may also include a user portal for development of the application program, allowing input parameters to be entered and modified as necessary.

The operating system 534 may be loaded into the memory 530 and may provide an interface between other application software executing on the computer system 510 and hardware resources of the computer system 510. More specifically, the operating system 534 may include a set of computer-executable instructions for managing hardware resources of the computer system 510 and for providing common services to other application programs (e.g., managing memory allocation among various application programs). In certain example embodiments, the operating system 534 may control execution of one or more of the program modules depicted as being stored in the data storage 540. The operating system 534 may include any operating system now known or which may be developed in the future including, but not limited to, any server operating system, any mainframe operating system, or any other proprietary or non-proprietary operating system.

The computer system 510 may also include a disk/media controller 543 coupled to the system bus 521 to control one or more storage devices for storing information and instructions, such as a magnetic hard disk 541 and/or a removable media drive 542 (e.g., floppy disk drive, compact disc drive, tape drive, flash drive, and/or solid state drive). Storage devices 540 may be added to the computer system 510 using an appropriate device interface (e.g., a small computer system interface (SCSI), integrated device electronics (IDE), Universal Serial Bus (USB), or FireWire). Storage devices 541, 542 may be external to the computer system 510.

The computer system 510 may also include a field device interface 565 coupled to the system bus 521 to control a field device 566, such as a device used in a production line. The computer system 510 may include a user input interface or GUI 561, which may comprise one or more input devices, such as a keyboard, touchscreen, tablet and/or a pointing device, for interacting with a computer user and providing information to the processors 520.

The computer system 510 may perform a portion or all of the processing steps of embodiments of the invention in response to the processors 520 executing one or more sequences of one or more instructions contained in a memory, such as the system memory 530. Such instructions may be read into the system memory 530 from another computer readable medium of storage 540, such as the magnetic hard disk 541 or the removable media drive 542. The magnetic hard disk 541 (or solid state drive) and/or removable media drive 542 may contain one or more data stores and data files used by embodiments of the present disclosure. The data store 540 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 520 may also be employed in a multi-processing arrangement to execute the one or more sequences of instructions contained in system memory 530. In alternative embodiments, hard-wired circuitry may be used in place of or in combination with software instructions. Thus, embodiments are not limited to any specific combination of hardware circuitry and software.

As stated above, the computer system 510 may include at least one computer readable medium or memory for holding instructions programmed according to embodiments of the invention and for containing data structures, tables, records, or other data described herein. The term "computer readable medium" as used herein refers to any medium that participates in providing instructions to the processors 520 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 541 or removable media drive 542. Non-limiting examples of volatile media include dynamic memory, such as system memory 530. Non-limiting examples of transmission media include coaxial cables, copper wire, and fiber optics, including the wires that make up the system bus 521. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 300 may further include the computer system 510 operating in a networked environment using logical connections to one or more remote computers, such as remote computing device 580. The network interface 570 may enable communication, for example, with other remote devices 580 or systems and/or the storage devices 541, 542 via the network 571. Remote computing device 580 may be a personal computer (laptop or desktop), a mobile device, a server, a router, a network PC, a peer device or other common network node, and typically includes many or all of the elements described above relative to computer system 510. When used in a networking environment, computer system 510 may include modem 572 for establishing communications over a network 571, such as the Internet. Modem 572 may be connected to system bus 521 via user network interface 570, or via another appropriate mechanism.

Network 571 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 510 and other computers (e.g., remote computing device 580). The network 571 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 571.

It should be appreciated that the program modules, applications, computer-executable instructions, code, or the like depicted in FIG. 4 as being stored in the system memory 530 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 510, the remote device 580, and/or hosted on other computing device(s) accessible via one or more of the network(s) 571, may be provided to support functionality provided by the program modules, applications, or computer-executable code depicted in FIG. 4 and/or additional or alternate functionality. Further, functionality may be modularized differently such that processing described as being supported collectively by the collection of program modules depicted in FIG. 4 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 7 may be implemented, at least partially, in hardware and/or firmware across any number of devices.

It should further be appreciated that the computer system 510 may include alternate and/or additional hardware, software, or firmware components beyond those described or depicted without departing from the scope of the disclosure. More particularly, it should be appreciated that software, firmware, or hardware components depicted as forming part of the computer system 510 are merely illustrative and that some components may not be present or additional components may be provided in various embodiments. While various illustrative program modules have been depicted and described as software modules stored in system memory 530, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the appended claims. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of the appended claims. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for robotic repair performed by a node within a core network that defines a plurality of network slices, the method comprising:

   obtaining a directed acyclic graph, DAG, and an arrival time associated with a first user equipment, UE, the arrival time indicating when the first UE connected to the core network;
   based on the DAG, calculating a task priority associated with the first UE;
   based on the arrival time and the task priority, calculating a UE priority associated with the first UE;
   based on the UE priority, assigning the first UE to a first network slice of the plurality of network slices;
   calculating an average load defined by user plane functions within the first network slice;
   comparing the average load to a predetermined threshold; and
   when the average load is less than the predetermined threshold, performing an objective function so as to determine that a first user plane function of the user plane functions within the first network slice has more available resources as compared to the other user plane functions within the first network slice.

2. The method as recited in claim 1, the method further comprising:

   identifying a new connection between the first UE and the core network; and
   obtaining the DAG responsive to the new connection.

3. The method as recited in claim 1, the method further comprising:

   storing the task priority in a sorted list, the sorted list defining tasks and respective priorities associated with each task; and
calculating the UE priority further based on the sorted list.

4. The method as recited in claim 1, the method further comprising:
based on the task priority, creating a user plane function, UPF, pool associated with each network slice of the plurality of network slices, the UPF pool associated with the first network slice defining the first user plane function.

5. The method as recited in claim 4, the method further comprising:

determining whether a UE waitlist is empty such that the UE waitlist includes no available UE; and
when the UE waitlist is not empty such that the UE waitlist includes at least one available UE, assigning the first UE to the first network slice.

6. The method as recited in claim 5, the method further comprising:

determining whether the first network slice is empty such that the first network slice includes no user plane functions; and
when the first network slice is not empty, calculating the average load defined by the user plane functions within the first network slice.

7. The method as recited in claim 6, the method further comprising:

pre-assigning the first UE to the first user plane function so as to define a new average load defined by the user plane functions within the first network slice;
comparing the new average load to the predetermined threshold; and
when the new average load is less than the predetermined threshold, assigning the first UE to the first user plane function.

8. The method as recited in claim 7, the method further comprising:
when the first network slice is empty, or when the average load or the new average load is greater than the predetermined threshold, determining whether the UPF pool associated with the first network slice is empty.

9. The method as recited in claim 8, the method further comprising:
when the UPF pool associated with the first network slice is empty, waiting for an available UPF from the UPF pool associated with the first network slice.

10. The method as recited in claim 8, the method further comprising:

when the UPF pool associated with the first network slice is not empty, assigning a second UPF from the UPF pool to the first network slice; and
assigning the first UE to the second UPF.

11. A core network comprising:

a plurality of core network functions that define a plurality of network slices;
a processor;
and a memory storing instructions that, when executed by the processor, cause the core network to:

obtain a directed acyclic graph ,DAG, and an arrival time associated with a first user equipment,UE, the arrival time indicating when the first UE connected to the core network;
based on the DAG, calculate a task priority associated with the first UE;
based on the arrival time and the task priority, calculate a UE priority associated with the first UE;
based on the UE priority, assign the first UE to a first network slice of the plurality of network slices;
calculate an average load defined by user plane functions within the first network slice;
compare the average load to a predetermined threshold; and
when the average load is less than the predetermined threshold, perform an objective function so as to determine that a first user plane function of the user plane functions within the first network slice has more available resources as compared to the other user plane functions within the first network slice.

**12.** The core network as recited in claim 11, the memory further storing instructions that, when executed by the processor, further cause the core network to:

identify a new connection between the first UE and the core network; and
obtain the DAG responsive to the new connection.

**13.** The core network as recited in claim 11, the memory further storing instructions that, when executed by the processor, further cause the core network to:

store the task priority in a sorted list, the sorted list defining tasks and respective priorities associated with each task; and
calculate the UE priority further based on the sorted list.

**14.** The core network as recited in claim 11, the memory further storing instructions that, when executed by the processor, further cause the core network to:
based on the task priority, create a user plane function,UPF, pool associated with each network slice of the plurality of network slices, the UPF pool associated with the first network slice defining the first user plane function.

**15.** The core network as recited in claim 14, the memory further storing instructions that, when executed by the processor, further cause the core network to:

determine whether a UE waitlist is empty such that the UE waitlist includes no available UE; and
when the UE waitlist is not empty such that the UE waitlist includes at least one available UE, assign the first UE to the first network slice.

**Patentansprüche**

**1.** Verfahren zur robotischen Reparatur, das von einem Knoten innerhalb eines Kernnetzwerks durchgeführt wird, das eine Mehrzahl von Netzwerk-Slices definiert, wobei das Verfahren Folgendes umfasst:

Erhalten eines gerichteten azyklischen Graphen, DAG, und einer Ankunftszeit, die mit einer ersten Benutzereinrichtung, UE, assoziiert ist, wobei die Ankunftszeit angibt, wann die erste UE mit dem Kernnetzwerk verbunden ist;
basierend auf dem DAG Berechnen einer Aufgabenpriorität, die mit der ersten UE assoziiert ist;
basierend auf der Ankunftszeit und der Aufgabenpriorität Berechnen einer mit der ersten UE assoziierten UE-Priorität;
basierend auf der UE-Priorität Zuweisen der ersten UE zu einem ersten Netzwerk-Slice der Mehrzahl von Netzwerk-Slices;
Berechnen einer Durchschnittslast, die durch Benutzerebenenfunktionen innerhalb des ersten Netzwerk-Slices definiert wird;
Vergleichen der Durchschnittslast mit einem vordefinierten Schwellenwert; und,
wenn die Durchschnittslast unter dem vordefinierten Schwellenwert liegt, Ausführen einer Zielfunktion, um zu bestimmen, dass eine erste Benutzerebenenfunktion der Benutzerebenenfunktionen innerhalb des ersten Netzwerk-Slices im Vergleich zu den anderen Benutzerebenenfunktionen innerhalb des ersten Netzwerk-Slices mehr verfügbare Ressourcen aufweist.

**2.** Verfahren nach Anspruch 1, wobei das Verfahren ferner Folgendes umfasst:

Identifizieren einer neuen Verbindung zwischen der ersten UE und dem Kernnetzwerk und
Erhalten des DAG in Reaktion auf die neue Verbindung.

**3.** Verfahren nach Anspruch 1, wobei das Verfahren ferner Folgendes umfasst:

Speichern der Aufgabenpriorität in einer sortierten Liste, wobei die sortierte Liste Aufgaben und jeweiligen Prioritäten definiert, die mit jeder Aufgabe assoziiert sind; und
Berechnen der UE-Priorität ferner basierend auf der sortierten Liste.

4. Verfahren nach Anspruch 1, wobei das Verfahren ferner Folgendes umfasst:
basierend auf der Aufgabenpriorität Erstellen eines Benutzerebenenfunktionspools, UPF-Pools, der mit jedem Netzwerk-Slice der Mehrzahl von Netzwerk-Slices assoziiert ist, wobei der mit dem ersten Netzwerk-Slice assoziierte UPF-Pool die erste Benutzerebenenfunktion definiert.

5. Verfahren nach Anspruch 4, wobei das Verfahren ferner Folgendes umfasst:

Bestimmen, ob eine UE-Warteliste leer ist, sodass die UE-Warteliste keine verfügbare UE aufweist; und, wenn die UE-Warteliste nicht leer ist, so dass die UE-Warteliste mindestens eine verfügbare UE aufweist, Zuweisen der ersten UE zu dem ersten Netzwerk-Slice.

6. Verfahren nach Anspruch 5, wobei das Verfahren ferner Folgendes umfasst:

Bestimmen, ob der erste Netzwerk-Slice leer ist, sodass der erste Netzwerk-Slice keine Benutzerebenenfunktionen aufweist; und, wenn der erste Netzwerk-Slice nicht leer ist, Berechnen der Durchschnittslast, die durch die Benutzerebenenfunktionen innerhalb des ersten Netzwerk-Slices definiert wird.

7. Verfahren nach Anspruch 6, wobei das Verfahren ferner Folgendes umfasst:

Vorabzuweisen der ersten UE zu der ersten Benutzerebenenfunktion, um eine neue Durchschnittslast zu definieren, die durch die Benutzerebenenfunktionen innerhalb des ersten Netzwerk-Slices definiert wird; Vergleichen der neuen Durchschnittslast mit dem vorbestimmten Schwellenwert; und, wenn die neue Durchschnittslast unter dem vorbestimmten Schwellenwert liegt, Zuweisen der ersten UE zu der ersten Benutzerebenenfunktion.

8. Verfahren nach Anspruch 7, wobei das Verfahren ferner Folgendes umfasst:
wenn der erste Netzwerk-Slice leer ist oder wenn die Durchschnittslast oder die neue Durchschnittslast über dem vorbestimmten Schwellenwert liegt, Bestimmen, ob der mit dem ersten Netzwerk-Slice assoziierte UPF-Pool leer ist.

9. Verfahren nach Anspruch 8, wobei das Verfahren ferner Folgendes umfasst:
wenn der mit dem ersten Netzwerk-Slice assoziierte UPF-Pool leer ist, Warten auf eine verfügbare UPF aus dem UPF-Pool, der mit dem ersten Netzwerk-Slice assoziiert ist.

10. Verfahren nach Anspruch 8, wobei das Verfahren ferner Folgendes umfasst:

wenn der mit dem ersten Netzwerk-Slice assoziierte UPF-Pool nicht leer ist, Zuweisen einer zweiten UPF aus dem UPF-Pool zu dem ersten Netzwerk-Slice; und Zuweisen der ersten UE zu der zweiten UPF.

11. Kernnetzwerk, umfassend:

eine Mehrzahl von Kernnetzwerkfunktionen, die eine Mehrzahl von Netzwerk-Slices definiert; einen Prozessor; einen Speicher, der Anweisungen speichert, die bei Ausführung durch den Prozessor das Kernnetzwerk zu Folgendem veranlassen: Erhalten eines gerichteten azyklischen Graphen, DAG, und einer Ankunftszeit, die mit einer ersten Benutzereinrichtung, UE, assoziiert ist, wobei die Ankunftszeit angibt, wann die erste UE mit dem Kernnetzwerk verbunden ist;

basierend auf dem DAG Berechnen einer Aufgabenpriorität, die mit der ersten UE assoziiert ist; basierend auf der Ankunftszeit und der Aufgabenpriorität Berechnen einer mit der ersten UE assoziierten UE-Priorität; basierend auf der UE-Priorität Zuweisen der ersten UE zu einem ersten Netzwerk-Slice der Mehrzahl von Netzwerk-Slices; Berechnen einer Durchschnittslast, die durch Benutzerebenenfunktionen innerhalb des ersten Netzwerk-Slices definiert wird; Vergleichen der Durchschnittslast mit einem vordefinierten Schwellenwert; und,

wenn die Durchschnittslast unter dem vordefinierten Schwellenwert liegt, Ausführen einer Zielfunktion, um zu bestimmen, dass eine erste Benutzerebenenfunktion der Benutzerebenenfunktionen innerhalb des ersten Netzwerk-Slices im Vergleich zu den anderen Benutzerebenenfunktionen innerhalb des ersten Netzwerk-Slices mehr verfügbare Ressourcen aufweist.

12. Kernnetzwerk nach Anspruch 11, wobei der Speicher ferner Anweisungen speichert, die bei Ausführung durch den Prozessor das Kernnetzwerk ferner zu Folgendem veranlassen:

Identifizieren einer neuen Verbindung zwischen der ersten UE und dem Kernnetzwerk und
Erhalten des DAG in Reaktion auf die neue Verbindung.

13. Kernnetzwerk nach Anspruch 11, wobei der Speicher ferner Anweisungen speichert, die bei Ausführung durch den Prozessor das Kernnetzwerk ferner zu Folgendem veranlassen:

Speichern der Aufgabenpriorität in einer sortierten Liste, wobei die sortierte Liste Aufgaben und jeweiligen Prioritäten definiert, die mit jeder Aufgabe assoziiert sind; und
Berechnen der UE-Priorität ferner basierend auf der sortierten Liste.

14. Kernnetzwerk nach Anspruch 11, wobei der Speicher ferner Anweisungen speichert, die bei Ausführung durch den Prozessor das Kernnetzwerk ferner zu Folgendem veranlassen:
basierend auf der Aufgabenpriorität Erstellen eines Benutzerebenenfunktionspools, UPF-Pools, der mit jedem Netzwerk-Slice der Mehrzahl von Netzwerk-Slices assoziiert ist, wobei der mit dem ersten Netzwerk-Slice assoziierte UPF-Pool die erste Benutzerebenenfunktion definiert.

15. Kernnetzwerk nach Anspruch 14, wobei der Speicher ferner Anweisungen speichert, die bei Ausführung durch den Prozessor das Kernnetzwerk ferner zu Folgendem veranlassen:

Bestimmen, ob eine UE-Warteliste leer ist, sodass die UE-Warteliste keine verfügbare UE aufweist; und,
wenn die UE-Warteliste nicht leer ist, so dass die UE-Warteliste mindestens eine verfügbare UE aufweist, Zuweisen der ersten UE zu dem ersten Netzwerk-Slice.

**Revendications**

1. Procédé de réparation robotisée réalisé par un nœud au sein d'un cœur de réseau qui définit une pluralité de tranches de réseau, le procédé comprenant :

l'obtention d'un graphe orienté acyclique, dit DAG, et d'une heure d'arrivée associée à un premier équipement utilisateur, dit UE, l'heure d'arrivée indiquant le moment où le premier UE s'est connecté au cœur de réseau ;
sur la base du DAG, le calcul d'une priorité de tâche associée au premier UE ;
sur la base de l'heure d'arrivée et de la priorité de tâche, le calcul d'une priorité d'UE associée au premier UE ;
sur la base de la priorité d'UE, l'affectation du premier UE à une première tranche de réseau parmi la pluralité de tranches de réseau ;
le calcul d'une charge moyenne définie par des fonctions du plan utilisateur au sein de la première tranche de réseau ;
la comparaison de la charge moyenne à un seuil prédéterminé ; et
lorsque la charge moyenne est inférieure au seuil prédéterminé, la réalisation d'une fonction objectif de manière à déterminer qu'une première fonction du plan utilisateur parmi les fonctions du plan utilisateur au sein de la première tranche de réseau possède davantage de ressources disponibles que les autres fonctions du plan utilisateur au sein de la première tranche de réseau.

2. Procédé selon la revendication 1, le procédé comprenant en outre :

l'identification d'une nouvelle connexion entre le premier UE et le cœur de réseau ; et
l'obtention du DAG en réponse à la nouvelle connexion.

3. Procédé selon la revendication 1, le procédé comprenant en outre :

le stockage de la priorité de tâche dans une liste triée, la liste triée définissant des tâches et des priorités respectives associées à chaque tâche ; et
le calcul de la priorité d'UE sur la base en outre de la liste triée.

4. Procédé selon la revendication 1, le procédé comprenant en outre :
sur la base de la priorité de tâche, la création d'un pool de fonctions du plan utilisateur, dites UPF, associé à chaque tranche de réseau parmi la pluralité de tranches de réseau, le pool d'UPF associé à la première tranche de réseau définissant la première fonction du plan utilisateur.

5. Procédé selon la revendication 4, le procédé comprenant en outre :

la détermination si une liste d'attente d'UE est vide, de sorte que la liste d'attente d'UE ne comporte aucun UE disponible ; et
lorsque la liste d'attente d'UE n'est pas vide, de sorte que la liste d'attente d'UE comporte au moins un UE disponible, l'affectation du premier UE à la première tranche de réseau.

6. Procédé selon la revendication 5, le procédé comprenant en outre :

la détermination si la première tranche de réseau est vide, de sorte que la première tranche de réseau ne comporte aucune fonction du plan utilisateur ; et
lorsque la première tranche de réseau n'est pas vide, le calcul de la charge moyenne définie par les fonctions du plan utilisateur au sein de la première tranche de réseau.

7. Procédé selon la revendication 6, le procédé comprenant en outre :

la pré-affectation du premier UE à la première fonction du plan utilisateur de manière à définir une nouvelle charge moyenne définie par les fonctions du plan utilisateur au sein de la première tranche de réseau ;
la comparaison de la nouvelle charge moyenne au seuil prédéterminé ; et
lorsque la nouvelle charge moyenne est inférieure au seuil prédéterminé, l'affectation du premier UE à la première fonction du plan utilisateur.

8. Procédé selon la revendication 7, le procédé comprenant en outre :
lorsque la première tranche de réseau est vide, ou lorsque la charge moyenne ou la nouvelle charge moyenne est supérieure au seuil prédéterminé, la détermination si le pool d'UPF associé à la première tranche de réseau est vide.

9. Procédé selon la revendication 8, le procédé comprenant en outre :
lorsque le pool d'UPF associé à la première tranche de réseau est vide, l'attente d'une UPF disponible issue du pool d'UPF associé à la première tranche de réseau.

10. Procédé selon la revendication 8, le procédé comprenant en outre :

lorsque le pool d'UPF associé à la première tranche de réseau n'est pas vide, l'affectation d'une deuxième UPF issue du pool d'UPF à la première tranche de réseau ; et
l'affectation du premier UE à la deuxième UPF.

11. Cœur de réseau comprenant :

une pluralité de fonctions de cœur de réseau qui définissent une pluralité de tranches de réseau ;
un processeur ;
et une mémoire stockant des instructions qui, lorsqu'elles sont exécutées par le processeur, amènent le cœur de réseau à :
obtenir un graphe orienté acyclique, dit DAG, et une heure d'arrivée associée à un premier équipement utilisateur, dit UE, l'heure d'arrivée indiquant le moment où le premier UE s'est connecté au cœur de réseau ;

sur la base du DAG, calculer une priorité de tâche associée au premier UE ;
sur la base de l'heure d'arrivée et de la priorité de tâche, calculer une priorité d'UE associée au premier UE ;
sur la base de la priorité d'UE, affecter le premier UE à une première tranche de réseau parmi la pluralité de tranches de réseau ;

calculer une charge moyenne définie par des fonctions du plan utilisateur au sein de la première tranche de réseau ;

comparer la charge moyenne à un seuil prédéterminé ; et

lorsque la charge moyenne est inférieure au seuil prédéterminé, réaliser une fonction objectif de manière à déterminer qu'une première fonction du plan utilisateur parmi les fonctions du plan utilisateur au sein de la première tranche de réseau possède davantage de ressources disponibles que les autres fonctions du plan utilisateur au sein de la première tranche de réseau.

12. Cœur de réseau selon la revendication 11, la mémoire stockant en outre des instructions qui, lorsqu'elles sont exécutées par le processeur, amènent en outre le cœur de réseau à :

identifier une nouvelle connexion entre le premier UE et le cœur de réseau ; et

obtenir le DAG en réponse à la nouvelle connexion.

13. Cœur de réseau selon la revendication 11, la mémoire stockant en outre des instructions qui, lorsqu'elles sont exécutées par le processeur, amènent en outre le cœur de réseau à :

stocker la priorité de tâche dans une liste triée, la liste triée définissant des tâches et des priorités respectives associées à chaque tâche ; et

calculer la priorité d'UE sur la base en outre de la liste triée.

14. Cœur de réseau selon la revendication 11, la mémoire stockant en outre des instructions qui, lorsqu'elles sont exécutées par le processeur, amènent en outre le cœur de réseau à :

sur la base de la priorité de tâche, créer un pool de fonctions du plan utilisateur, dites UPF, associé à chaque tranche de réseau parmi la pluralité de tranches de réseau, le pool d'UPF associé à la première tranche de réseau définissant la première fonction du plan utilisateur.

15. Cœur de réseau selon la revendication 14, la mémoire stockant en outre des instructions qui, lorsqu'elles sont exécutées par le processeur, amènent en outre le cœur de réseau à :

déterminer si une liste d'attente d'UE est vide, de sorte que la liste d'attente d'UE ne comporte aucun UE disponible ; et

lorsque la liste d'attente d'UE n'est pas vide, de sorte que la liste d'attente d'UE comporte au moins un UE disponible, affecter le premier UE à la première tranche de réseau.

**FIG. 1**

**FIG. 2**

200

- 202 IDENTIFY UE CONNECTIONS
- 204 OBTAIN DAG AND ARRIVAL TIMES
- 206 CALCULATE TASK PRIORITY
- 208 STORE IN SORTED LIST
- 210 CREATE UPF POOL
- 212 DETERMINE UE PRIORITY
- 214 OBTAIN AND/OR UPDATE UE WAITLIST

216 IS WAITLIST EMPTY?
- YES → 218 ASSIGN UE TO NETWORK SLICES
- NO

220 IS ASSIGNED NETWORK SLICE EMPTY?
- YES → (ASSIGN UE TO NETWORK SLICES)
- NO → 222 CALCULATE AVERAGE LOAD OF UPFs

224 IS AVG. LOAD GREATER THAN THRESHOLD?
- NO → 226 DETERMINE UPF RESOURCES
- YES → 234 IS UPF POOL EMPTY?

226 DETERMINE UPF RESOURCES → 228 PRE-ASSIGN UE TO UPF

230 IS NEW AVG. LOAD GREATER THAN THRESHOLD?
- YES → (back)
- NO → 232 ASSIGN UE TO UPF

234 IS UPF POOL EMPTY?
- NO → 236 ASSIGN UE TO NEW ASSIGNED UPF
- YES → (IS AVG. LOAD GREATER THAN THRESHOLD?)
- NO → 238 WAIT FOR AVAILABLE UPF

FIG. 3

**FIG. 4**

ROM 531
BIOS 533
RAM 532
OPERATING SYSTEM 534
APPLICATION PROGRAMS 535
OTHER PROGRAM MODULES 536
PROCESSORS
STORAGE 540
DISK/MEDIA CONTROLLER
SYSTEM BUS
USER INPUT INTERFACE
NETWORK INTERFACE
NETWORK

EP 4 497 270 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220124560 A1

- WO 2020167978 A1